# EUROPÄISCHE PATENTSCHRIFT

(11) **EP 4 257 880 B1**
(45) Veröffentlichungstag und Bekanntmachung des Hinweises auf die Patenterteilung: **11.02.2026**
(21) Anmeldenummer: 23163146.6
(22) Anmeldetag: 21.03.2023
(51) Int. Cl.: F23K 5/00, F23N 1/02

(54) **GASREGELVENTIL ZUR ELEKTRONISCHEN DRUCKREGELUNG AN EINER GASTHERME**
GAS CONTROL VALVE FOR ELECTRONIC PRESSURE CONTROL OF A GAS HEATER
SOUPAPE DE RÉGULATION DE GAZ POUR RÉGULATION ÉLECTRONIQUE DE PRESSION DANS UNE CHAUDIÈRE À GAZ

(30) Priorität: 04.04.2022 DE 102022107984
(43) Veröffentlichungstag der Anmeldung: 11.10.2023
(73) Patentinhaber: ebm-papst Landshut GmbH, 84030 Landshut (DE)
(72) Erfinder: HERTREITER, Martin, 84180 Loiching (DE); VROLIJK, Enno Jan, 7751DX Dalen (NL); WEINGART, Markus, 84056 Rottenburg (DE); SIMON, Bernhard, 80805 München (DE); SCHNURR, Alexander, 84051 Essenbach (DE); GEORGI, Plamen, 84032 Altdorf (DE); WALD, Stephan, 48341 Altenberge (DE)
(74) Vertreter: Staeger & Sperling Partnerschaftsgesellschaft mbB

(56) Entgegenhaltungen:
- EP-A2- 1 843 095
- DE-A1- 19 824 521
- US-A1- 2013 153 041
- US-A1- 2018 058 691

## Beschreibung

Die Erfindung betrifft ein Gasregelventil, wie es insbesondere zur elektronischen Druckregelung bei Gasthermen eingesetzt wird.

Gasregelventile zur Druckregelung sind im Stand der Technik und beispielsweise aus dem Dokument DE 10 2018 102 866 A1 bekannt. Bei Gasthermen, in welchen ein Gas-Luft-Gemisch verbrannt wird, wird bezüglich des Gases stromauf einer Mischeinrichtung, in welcher Gas mit Luft zu dem Gas-Luft-Gemisch vermischt wird, und ferner stromauf einer Hauptmengendrossel ein Gasregelventil zur Einstellung bzw. Regelung des in die Mischeinrichtung strömenden Gas-Volumenstroms verwendet.

Weiter sieht der Stand der Technik zumeist vor, dass die Druckregelung durch einen einzelnen Sensor und insbesondere einen einzelnen insbesondere elektrischen Differenzdrucksensor realisiert ist, welcher die Druckdifferenz bzw. den Differenzdruck zwischen dem Druck des Gases an einer ersten Messstelle zwischen Gasregelventil und Hauptmengendrossel und dem Druck der Luft an einer zweiten Messstelle bestimmt, welche in die Mischeinrichtung strömt.

Neben der allgemeinen Druckregelung ist im Stand der Technik auch beretis die elektronische Nulldruckregelung bekannt. Üblicherweise ist vorgesehen, dass das Gasregelventil die Durchflussrate des Gases in die Mischeinrichtung derart einregelt bzw. einstellt, dass die Druckdifferenz null ist, woraus sich der Begriff Nulldruckregelung ergibt.

Dabei ist problematisch, dass solche Differenzdrucksensoren oder andere alternative Sensoren zur Bestimmung der Durchflussrate des Gases durch das Gasregelventil und damit der Druckdifferenz zwischen Gas und Luft jeweils kalibriert werden müssen und die gesamte Regelung von dem ermittelten Wert abhängt.

Hinzukommt, dass solche Sensoren meist über vergleichsweise lange Druckleitungen mit den jeweiligen Messstellen verbunden sind, was zu zusätzlichen Fehlerquellen und einer zeitaufwändigen und mithin teuren Montage führt.

Weiterer relevanter Stand der Technik auf diesem Gebiet ist zudem durch die Schriften US 2013/153041 A1, EP 1 843 095 A2, DE 198 24 521 A1 und US 2018/058691 A1 gegeben. Die US 2013/0153041 A1 offenbart ein Gasregelventil zur elektronischen Druckregelung eines Gas-Luft-Gemisches an einer Gastherme. Das Gasregelventil weist ein Zentralmodul, ein Regelmodul und ein Sensormodul auf. Das Zentralmodul ist von einem Ventileingang zu einem Ventilausgang von Gas durchströmbar. Das Regelmodul ist unmittelbar an dem Zentralmodul angeordnet und ausgebildet, einen Durchfluss des Gases durch das Zentralmodul mit einem strömungstechnisch zwischen Ventileingang und Ventilausgang angeordneten Drosselelement zu regeln, wobei das Sensormodul unmittelbar an dem Zentralmodul angeordnet ist.

Der Erfindung liegt deshalb die Aufgabe zugrunde, die vorgenannten Nachteile zu überwinden und ein flexibel- und modulareinsetzbares Gasregelventil zur elektronischen Druckregelung und insbesondere Nulldruckregelung bereitzustellen.

Diese Aufgabe wird durch die Merkmalskombination gemäß Patentanspruch 1 gelöst.

Erfindungsgemäß wird daher ein Gasregelventil zur elektronischen Druckregelung, insbesondere Nulldruckregelung, eines Gas-Luft-Gemisches an einer Gastherme vorgeschlagen. Das Gasregelventil weist ein Zentralmodul, ein Regelmodul und ein Sensormodul auf, wobei das Zentralmodul von einem Ventileingang zu einem Ventilausgang von Gas durchströmbar ist. Das Regelmodul ist unmittelbar an dem Zentralmodul anordenbar bzw. angeordnet und ausgebildet, einen Durchfluss des Gases durch das Zentralmodul zu regeln bzw. einzustellen. Hierfür weist das Regelmodul ein strömungstechnisch zwischen Ventileingang und Ventilausgang angeordnetes Drosselelement auf, welches insbesondere ein mit einem Ventilsitz zusammenwirkender Ventilkegel ist. Erfindungsgemäß ist vorgesehen, dass das Sensormodul unmittelbar an dem Zentralmodul anordenbar ist und zumindest einen Sensor aufweist, welcher durch einen strömungstechnisch zwischen dem Drosselelement und dem Ventilausgang angeordneten Gaseinlass mit dem das Zentralmodul durchströmenden Gas in Wirkverbindung steht und welcher ausgebildet ist, zur Druckregelung bzw. Nulldruckregelung eine Druckdifferenz zwischen dem das Zentralmodul durchströmenden Gas und einer einen Referenzdruck aufweisenden Luft, beispielsweise als Differenzdruck oder als Massenstrom zu erfassen.

Ein Grundgedanke der Erfindung ist es also, den Druck für das Sensormodul insbesondere am Gasregelventil bzw. an dessen Zentralmodul abzugreifen und nicht außerhalb des Gasregelventils, wie es im Stand der Technik meist der Fall ist. Dadurch werden Leitungslängen und Reaktionszeiten deutlich verkürzt.

Das Gasregelventil ist vorzugsweise entsprechend eine Baueinheit mit mehreren an dem Zentralmodul anordenbaren Modulen, welche bei Bedarf bzw. Beschädigung oder Wartung ausgetauscht werden können.

Weiter sieht eine vorteilhafte Variante vor, dass das Sensormodul zwei Sensoren aufweist. Sind zumindest zwei Sensoren vorgesehen, liegt durch die zwei Sensoren eine redundante Sensorik vor, wodurch die Sicherheit und Genauigkeit der Messung erhöht werden kann.

Ferner können die von den Sensoren erfassten Werte miteinander und/oder gespeicherten Verläufen plausibilisiert und Abweichungen kompensiert werden, sodass die Sensoren nicht kalibriert oder zumindest nicht manuell kalibriert werden müssen. Insbesondere über die Lebensdauer der Sensoren auftretende und beispielsweise langsam ansteigende Abweichungen können erkannt und kompensiert bzw. die Sensoren automatisiert kalibriert werden.

Eine vorteilhafte Ausführungsform sieht zudem vor, dass der zumindest eine Sensor ein Massenstromsensor ist, welcher ausgebildet ist, die Druckdifferenz durch Messung eines Massenstroms zwischen dem Gaseinlass und einem mit der Luft in Wirkverbindung stehenden Lufteinlass des Sensormoduls zu erfassen.

Weiter kann der zumindest eine Sensor ein Differenzdrucksensor sein, welcher ausgebildet ist, die Druckdifferenz durch Messung eines Differenzdrucks zwischen dem Gas, welches das Zentralmodul stromab des Regelmoduls durchströmt, und der Luft an einem Lufteinlass des Sensormoduls zu erfassen, aus welchen das Gas-Luft-Gemisch gebildet wird.

Ist ein zweiter bzw. generell weitere Sensoren vorgesehen, können die Sensoren vom gleichen oder einem unterschiedlichen Typ sein. Entsprechend können bei zwei Sensoren beide Sensoren als Differenzdrucksensor oder als Massenstromsensor ausgebildet sein. Weiter kann bei zwei Sensoren auch einer der Sensoren als Differenzdruck- und der andere als Massenstromsensor ausgebildet sein, wodurch die zur Erfassung der Durchflussrate ermittelten Werte auf unterschiedlichen Messmethoden basieren, sodass die Sicherheit weiter erhöht werden kann.

An dem Lufteinlass des Sensormoduls kann zudem ein Staubfilter vorgesehen sein. Dadurch wird der zumindest eine Sensor vor Verschmutzung geschützt und mithin das gesamte Gasregelventil robuster und weniger störungsanfällig.

Das Sensormodul kann zudem unmittelbar eine Regelelektronik aufweisen, welche ausgebildet ist, aus den jeweiligen von den zwei Sensoren gemessenen Werten einen Mittelwert zu bestimmen und/oder die von den Sensoren gemessenen Werte miteinander zu vergleichen und/oder zu plausibilisieren. Die Plausibilisierung kann dabei durch den Vergleich der Werte miteinander oder mit historischen Werten durchgeführt werden. Die Regelelektronik kann zudem auch unmittelbar das Regelmodul ansteuern und den Durchfluss durch das Gasregelventil mittels des Drosselelements regeln.

Um die von dem zumindest einen Sensor erfassten Werte oder Statusinformationen des zumindest einen Sensors oder anderer Komponenten des Gasregelventils auch extern auswerten zu können, kann das Gasregelventil und insbesondere das Sensormodul ferner zumindest eine Kommunikationsschnittstelle aufweisen, über welche beispielsweise die von den Sensoren erfassten Werte, Status- und/oder Fehlerinformationen an eine übergeordnete Steuerung der Gastherme weitergegeben werden können. Auch können beispielsweise Kalibrierwerte, Status- und/oder Fehlerinformationen des Regelmoduls durch die Kommunikationsschnittstelle weitergegeben werden.

Zudem kann das Gasregelventil und insbesondere das Sensormodul eine Spannungsversorgungseinheit zur Spannungsversorgung der Steuerelektronik und/oder des zumindest einen Sensors aufweisen. Diese kann zwar in das Sensormodul integriert sein, jedoch auch alternativ auf einer Hauptplatine einer Boiler-Sicherheitselektronik oder der Boiler-Elektronik der Gastherme realisiert sein, sodass in dem Sensormodul bzw. innerhalb des Gehäuses des Sensormoduls kein Bauraum hierfür vorgesehen werden muss.

Erfindungsgemäß weisen das Zentralmodul und das Sensormodul zueinander korrespondierende Befestigungsschnittstellen auf, sodass das Sensormodul unmittelbar an dem Zentralmodul fixierbar ist. Dabei sieht das Zentralmodul an mehreren Seiten Befestigungsschnittstellen vor, sodass das Sensormodul alternativ an jeder der Seiten fixierbar ist. Dadurch kann das Sensormodul bei Bedarf an verschiedenen Seiten des Zentralmoduls angebracht werden, sodass auf unterschiedliche Bauraumanforderungen unterschiedlicher Gasthermen ein jeweils angepasstes Gasregelventil bereitgestellt werden kann. Durch die Befestigungsschnittstellen, welche beispielsweise als Schrauben, Schnappverbinder, Rastverbinder oder Klemmen ausgeführt sein können, wird zudem auch eine einfache und schnelle Auswechselbarkeit defekter Komponenten gewährleistet. Das Sensormodul muss jedoch nicht zwingend unmittelbar an dem Zentralmodul angeordnet werden, sondern kann beispielsweise durch die nachfolgend genannte Fluidleitung mit diesem Verbunden sein.

Vorzugsweise ist zudem vorgesehen, dass das Zentralmodul und das Sensormodul ferner zueinander korrespondierende Fluidschnittstellen aufweisen, durch welche der zumindest eine Sensor mit dem Gas in Verbindung stehen, welches das Zentralmodul stromab des Regelmoduls durchströmt. Die Fluidschnittstellen sind unmittelbar und/oder über eine Fluidleitung miteinander verbindbar. Bei der unmittelbaren Verbindung werden also die Fluidschnittstelle oder die Fluidschnittstellen des Sensormoduls unmittelbar mit der Fluidschnittstelle oder den Fluidschnittstellen des Zentralmoduls verbunden, was beispielsweise durch eine Verrastung durchströmbarer Stutzen realisiert werden kann. Dadurch, dass die Fluidschnittstellen auch über eine Fluidleitung oder bei Bedarf mehrere Fluidleitungen miteinander verbunden werden können, kann das Sensormodul auch beabstandet zu dem Zentralmodul angeordnet werden. Solche Fluidleitung können beispielsweise durch flexible Schläuche oder starre Leitungen ausgebildet sein.

Dabei ist ferner vorzugsweise vorgesehen, dass die Fluidschnittstelle des Zentralmoduls mit dem Gaseinlass des Sensormoduls verbunden ist, welcher stromab des Regelmoduls in einem von Gas durchströmten Bereich des Zentralmoduls mündet. Der Einlass bzw. die Position an welcher dieser in das Zentralmodul mündet, bildet dabei die bereits genannte erste Messstelle. In Relation zu einer in der Gastherme gegebenenfalls vorgesehenen Hauptmengendrossel ist der Einlass bzw. die erste Messstelle entsprechend insbesondere stromab des Regelmoduls und stromauf der Hauptmengendrossel und zudem innerhalb des Gasregelventils vorgesehen. Der Einlass steht mit dem Gas in Druckverbindung und ist dabei von der Gasströmung durch eine Abschirmung abgeschirmt, welche den Einlass in Strömungsrichtung des Gases überdeckt. Durch die Abschirmung strömt das Gas daher nicht unmittelbar an dem Einlass vorbei, welcher entsprechend in einem strömungsberuhigten Bereich bzw. in einem Strömungsschatten liegt, sodass der von den Sensoren erfasste Wert nicht verfälscht wird.

Besonders bevorzugt weist das Zentralmodul ein Gehäuse auf, welches stromab des Regelmoduls eine von einem Deckel abgedeckte Öffnung besitzt. Zwischen dem Deckel und dem Gehäuse ist eine Dichtung vorgesehen, wobei die Abschirmung durch den Deckel und/oder die Dichtung gebildet ist.

Der Einlass selbst kann in dem Deckel oder dem Gehäuse vorgesehen sein, wobei die Abschirmung nicht nur durch den Deckel oder die Dichtung, sondern alternativ durch einen zusätzlich vorgesehenen Abdeckkörper oder das Gehäuse selbst gebildet sein kann.

Um eine Beschädigung durch Kondensat oder allgemein Feuchtigkeit am Sensor zu vermeiden, kann das Sensormodul zudem zumindest einen Kondensatablauf aufweisen. Ein solcher Kondensatablauf ist dabei ausgebildet, ein in dem Sensormodul und insbesondere an den zwei Sensoren entstehendes Kondensat bzw. Feuchtigkeit zu sammeln und/oder aus dem Sensormodul abzuführen. Hierdurch lässt sich die Robustheit und die Lebensdauer des Sensormoduls und entsprechend des gesamten Gasregelventils weiter erhöhen. Der Kondensatablauf kann dabei durch eine Sensoraufnahme ausgeführt sein, in welcher die Sensoren angeordnet sind, sodass die Feuchtigkeit bzw. das Kondensat von den Sensoren weggeführt wird und nicht in einen der Sensoren eintreten kann.

Zudem kann das Gasregelventil ein Sicherheitsmodul aufweisen, welches stromauf des Regelmoduls am Zentralmodul angeordnet und ausgebildet ist, den Durchfluss des Gases durch das Zentralmodul in einer Sperrstellung zu unterbinden und in einer Durchlassstellung freizugeben.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: schematischer Aufbau eines Gas-Luft-Systems einer Gastherme;
- Fig. 2: eine erste Variante eines Gasregelventils;
- Fig. 3: eine zweite Variante eines Gasregelventils;
- Fig. 4: eine dritte Variante eines Gasregelventils;
- Fig. 5: schematischer Aufbau eines Gasregelventils.

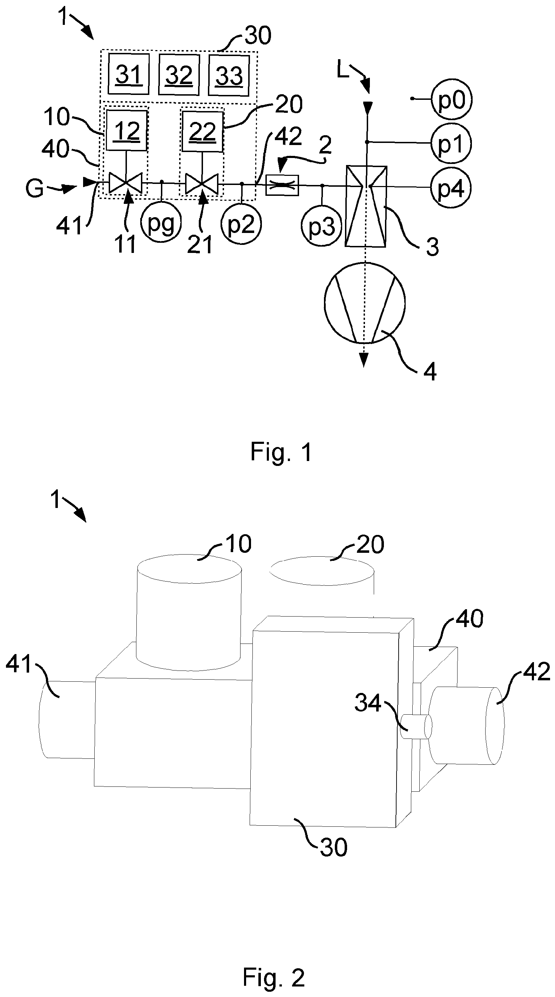

Die Figuren sind beispielhaft schematisch. Gleiche Bezugszeichen in den Figuren weisen auf gleiche funktionale und/oder strukturelle Merkmale hin. Figur 1 zeigt schematisch einen Teil bzw. einen Ausschnitt einer Gastherme und genauer den schematischen Aufbau eines Gas-Luft-Systems einer Gastherme, wobei ein Venturi-Mischer als Mischeinrichtung 3 dargestellt ist, in welchen von einem Gebläse 4 Luft durch einen Lufteinlass L aus der Umgebung mit einem Luftdruck p0 gesaugt wird. In der Mischeinrichtung 3 wird die einströmende Luft und ein durch die Brennstoffzufuhr G einströmender Brennstoff (Gas) zu einem Gas-Luft-Gemisch vermischt.

Das von der Brennstoffzufuhr G einströmende Gas durchströmt dabei ein Sicherheitsmodul 10 mit einem Sicherheitsventil 11, ein Regelmodul 20 mit einem beispielsweise als Proportionalventil ausgebildeten Ventil 21 sowie die Hauptmengendrossel 2. Das Sicherheitsventil 11 weist vorzugsweise eine Durchlass- und eine Sperrstellung auf, in welcher der Durchfluss des Brennstoffs durch das Sicherheitsventil 11 gesperrt ist, wobei das Sicherheitsventil 11 von einem dafür vorgesehenen Aktor 12 des Sicherheitsmoduls 10 in die jeweilige Stellung bringbar ist. Das Sicherheitsventil 11 kann zusätzlich oder alternativ auch manuell- bzw. handbetätigbar sein. Das Ventil 21 ist zur Regelung des Volumen- bzw. Massenstroms des Gases ausgebildet, sodass das Gas durch das Ventil 21 zu der Mischeinrichtung 3 einstellbar bzw. regelbar ist. Durch die Einstellung bzw. Regelung des Ventils 21 ist somit das Mischungsverhältnis des Gas-Luft-Gemisches einstellbar. Hierfür ist das Ventil 21 mit einem zugehörigen Aktor 22, beispielsweise einem Schrittmotor, verbunden, durch welchen die Durchflussstellung des Ventils 21 änderbar bzw. einstellbar ist, wobei der Aktor 22 von einer nicht dargestellten Regeleinrichtung, welche in das Sensormodul 30 integriert sein kann, mit einer Stellgröße angesteuert wird.

In dem Sensormodul 30 sind bei dem konkret dargestellten Beispiel zwei Differenzdrucksensoren 31, 32 vorgesehen, welche jeweils ausgebildet sind, den Differenzdruck zwischen dem Druck p2 des Gases stromauf der Hauptmengendrossel 2 und stromab des Ventils 21 sowie einem Referenzdruck zu bestimmen, wobei es sich bei dem Referenzdruck vorzugsweise um den Umgebungsdruck p0 oder einen Druck p1 der Luft in einer Luft führenden Zuleitung zu der Mischeinrichtung 3 handelt. Alternativ kann jedoch beispielsweise auch lediglich ein Differenzdrucksensor 31 vorgesehen sein.

Das Gas-Luft-Gemisch wird von dem Gebläse 4 zu einem nicht dargestellten Brenner der Gastherme gefördert, wo das Brennstoff-Luft-Gemisch verbrannt werden soll.

Insbesondere wird das Ventil 21 des Regelmoduls 20 durch den Aktor 22 derart eingestellt, dass das Sensormodul 30 eine Druckdifferenz von 0 bar erfasst.

Neben dem ersten Sensor 31 und dem zweiten Sensor 32 weist das Sensormodul 30 vorliegend auch eine Steuerelektronik 33 auf, durch welche die von den Sensoren 31, 32 erfassten Differenzdrücke verglichen und plausibilisiert und ein gemeinsamer Differenzdruck zur Steuerung des Ventils 21 über den Aktor 22 ermittelt werden.

Das Sicherheitsmodul 10, das Regelmodul 20 sowie das Sensormodul 30 sind vorliegend an dem Zentralmodul 40 vorgesehen, welches von seinem Ventileingang 41 zu seinem Ventilausgang 42 von Gas durchströmbar ist, sodass diese in ihrer Gesamtheit das Gasregelventil 1 bilden.

In den Figuren 1 bis 3 wird ein einziges Gasregelventil 1 gezeigt, bei welchen das Sensormodul 30 in verschiedenen Varianten an dem Zentralmodul 40 fixiert bzw. mit diesem verbunden ist. Daraus ergibt sich eine hohe Flexibilität des notwendigen Bauraums sowie eine einfache und schnelle Auswechselbarkeit der Module.

Hierfür weist das Zentralmodul 40 vorzugsweise an jeder seiner vier Seiten um seine Längsachse nicht dargestellte Befestigungsschnittstellen auf, welche zu ebenfalls nicht dargestellten Befestigungsschnittstellen des Sensormoduls 30 korrespondieren.

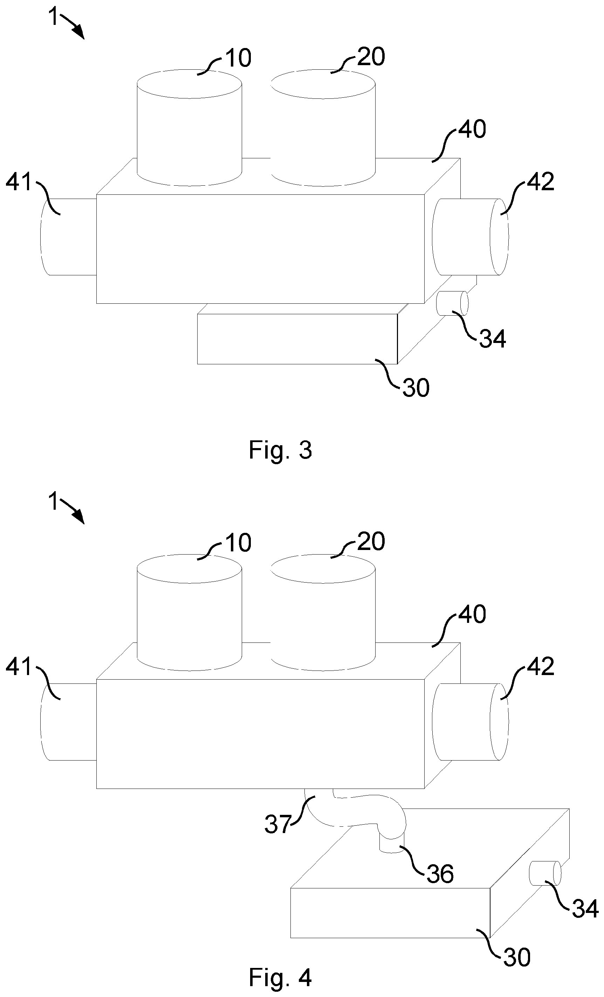

Bei dem Gasregelventil 1 gemäß Figur 2 ist das Sensormodul 30 an einer ersten Seite und gemäß der Figur 3 an einer dazu orthogonal stehenden zweiten Seite angeordnet. In Figur 4 ist ferner dargestellt, dass die zueinander korrespondierenden Fluidschnittstellen 36, 46 von Sensormodul 30 und Zentralmodul 40 alternativ durch eine Fluidleitung 37 verbindbar sind, sodass das Sensormodul 30 gemäß der Variante der Figur 4 nicht unmittelbar an dem Zentralmodul 40 angeordnet aber mit diesem drucktechnisch verbunden ist.

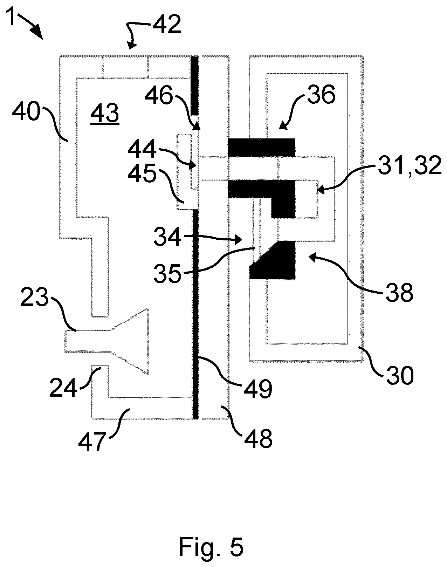

In Figur 5 ist ein Abschnitt des Zentralmoduls 40 und das Sensormodul 30 im Schnitt dargestellt.

Das Zentralmodul 40 wird von dem in Figur 5 nicht dargestellten Ventileingang 41 zu dem Ventilausgang 42 durchströmt, wobei durch das als Ventilkegel ausgebildete Drosselelement 23 und den Ventilsitz 24 des Regelmoduls 20 die Durchflussrate des Gases durch das Gasregelventil 1 einstellbar bzw. regelbar ist. Das über die Fluidschnittstellen 36, 46 drucktechnisch mit dem Gas verbundene Sensormodul 30 ist dabei für die elektronische Druckregelung bzw. für die Erfassung der Druckdifferenz zwischen dem Gas und der umgebenden Luft ausgelegt. Hierfür weist das Sensormodul 30 einen Lufteinlass 34 auf, an welchem ein Staubfilter 35 vorgesehen ist, um das Eindringen von Schmutzpartikeln in das Sensormodul 30 zu verhindern. Weiter ist an dem Lufteinlass 34 ein Kondensatablauf 38 vorgesehen, durch welchen an den Sensoren 31, 32 entstehendes Kondensat durch den Lufteinlass 34 in die Umgebung abgeführt werden kann.

An der Fluidschnittstelle 46 des Zentralmoduls 40 ist ein Gaseinlass 44 des Sensormoduls 30 vorgesehen, welcher in dem von Gas durchströmten Bereich 43 des Zentralmoduls 40 mündet, wobei der Gaseinlass 44 in Strömungsrichtung d.h. zu dem Ventilausgang 42 hin von einer Abschirmung 45 überdeckt ist.

Das Gehäuse 47 des Zentralmoduls 40 weist in dem Bereich 43 eine mit einem Deckel 48 verschlossene Öffnung auf, wobei der Deckel 48 integral die Abschirmung 45 bildet.

Alternativ kann jedoch auch eine zwischen Gehäuse 47 und Deckel 48 vorgesehene Dichtung 49 oder ein separates Bauteil die Abschirmung 45 bilden.

Durch die Abschirmung 45 liegt der Einlass in einem strömungsberuhigten Bereich, sodass es an den Sensoren 31, 32 in dem Sensormodul 30 zu keinen oder zumindest geringeren Druckschwankungen kommt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Gasregelventil (1) zur elektronischen Druckregelung eines Gas-Luft-Gemisches an einer Gastherme,
wobei das Gasregelventil (1) ein Zentralmodul (40), ein Regelmodul (20) und ein Sensormodul (30) aufweist,
wobei das Zentralmodul (40) von einem Ventileingang (41) zu einem Ventilausgang (42) von Gas durchströmbar ist,
wobei das Regelmodul (20) unmittelbar an dem Zentralmodul (40) anordenbar und ausgebildet ist, einen Durchfluss des Gases durch das Zentralmodul (40) mit einem strömungstechnisch zwischen Ventileingang (41) und Ventilausgang (42) angeordneten Drosselelement (23) zu regeln,
wobei das Sensormodul (30) unmittelbar an dem Zentralmodul (40) anordenbar ist und zumindest einen Sensor (31, 32) aufweist, welcher durch einen strömungstechnisch zwischen dem Drosselelement (23) und dem Ventilausgang (42) angeordneten Gaseinlass (44) mit dem das Zentralmodul (40) durchströmenden Gas in Wirkverbindung steht und welcher ausgebildet ist, zur Druckregelung eine Druckdifferenz zwischen dem das Zentralmodul (40) durchströmenden Gas und einer einen Referenzdruck aufweisenden Luft zu erfassen,
wobei das Zentralmodul (40) und das Sensormodul (30) zueinander korrespondierende Befestigungsschnittstellen aufweisen und das Sensormodul (30) unmittelbar an dem Zentralmodul (40) fixierbar ist
und das Zentralmodul (40) an mehreren Seiten Befestigungsschnittstellen vorsieht und das Sensormodul (30) alternativ an jeder der mehreren Seiten fixierbar ist.

2. Gasregelventil nach Anspruch 1,
wobei der zumindest eine Sensor (31, 32) ein Massenstromsensor und ausgebildet ist,
die Druckdifferenz durch Messung eines Massenstroms zwischen dem Gaseinlass (44) und einem mit der Luft in Wirkverbindung stehenden Lufteinlass (34) des Sensormoduls (30) zu erfassen.

3. Gasregelventil nach Anspruch 1 oder 2,
wobei der zumindest eine Sensor (31, 32) ein Differenzdrucksensor und ausgebildet ist, die Druckdifferenz durch Messung eines Differenzdrucks zwischen dem Gas, welches das Zentralmodul (40) stromab des Regelmoduls (20) durchströmt, und der Luft an einem Lufteinlass (34) des Sensormoduls (30) zu erfassen, aus welchen das Gas-Luft-Gemisch gebildet wird.

4. Gasregelventil nach Anspruch 2 oder 3,
wobei an dem Lufteinlass (34) des Sensormoduls (30) ein Staubfilter (35) vorgesehen ist.

5. Gasregelventil nach einem der vorhergehenden Ansprüche,
wobei das Sensormodul (30) zwei Sensoren (31, 32) aufweist.

6. Gasregelventil nach dem vorhergehenden Anspruch,
wobei das Sensormodul (30) eine Steuerelektronik (33) aufweist, welche ausgebildet ist, aus den jeweiligen von den Sensoren (31, 32) gemessenen Werten einen gemittelten Wert zu bestimmen und/oder die von den Sensoren (31, 32) gemessenen Werte miteinander zu vergleichen und/oder zu plausibilisieren.

7. Gasregelventil nach dem vorhergehenden Anspruch,
wobei die Steuerelektronik (33) zumindest eine Kommunikationsschnittstelle und/oder eine Spannungsversorgungseinheit zur Spannungsversorgung der Steuerelektronik (33) und/oder der Sensoren (31, 32) aufweist.

8. Gasregelventil nach einem der vorhergehenden Ansprüche,
wobei das Zentralmodul (40) und das Sensormodul (30) zueinander korrespondierende Fluidschnittstellen (36, 46) aufweisen, durch welche der zumindest eine Sensor (31, 32) mit dem das Zentralmodul (40) stromab des Regelmoduls (20) durchströmenden Gas in Verbindung stehen,
wobei die Fluidschnittstellen (36, 46) unmittelbar und/oder über eine Fluidleitung (37) miteinander verbindbar sind.

9. Gasregelventil nach dem vorhergehenden Anspruch,
wobei die Fluidschnittstelle (46) des Zentralmoduls (40) mit dem den Gaseinlass (44) verbunden ist, welcher stromab des Regelmoduls (20) in einem von Gas durchströmten Bereich (43) des Zentralmoduls (40) mündet,
wobei der Gaseinlass (44) mit dem Gas in Wirkverbindung steht und von der Gasströmung durch eine Abschirmung (45) abgeschirmt ist, welche den Gaseinlass (44) in Strömungsrichtung des Gases überdeckt.

10. Gasregelventil nach dem vorhergehenden Anspruch,
wobei das Zentralmodul (40) ein Gehäuse (47) aufweist, welches stromab des Regelmoduls (20) eine von einem Deckel (48) abgedeckte Öffnung aufweist,
wobei zwischen dem Deckel (48) und dem Gehäuse (47) eine Dichtung (49) vorgesehen ist
und wobei die Abschirmung (45) durch den Deckel (48) und/oder die Dichtung (47) oder einen Abschirmkörper gebildet ist.

11. Gasregelventil nach einem der vorhergehenden Ansprüche,
wobei das Sensormodul (30) zumindest einen Kondensatablauf (38) aufweist, welcher ausgebildet ist, ein in dem Sensormodul (30) entstehendes Kondensat zu sammeln und/oder aus dem Sensormodul (30) abzuführen.

12. Gasregelventil nach dem vorhergehenden Anspruch,
wobei der Kondensatablauf (38) ausgebildet ist, an dem zumindest einen Sensor (31, 32) entstehendes Kondensat zu sammeln und/oder aus dem Sensormodul (30) abzuführen.

13. Gasregelventil nach einem der vorhergehenden Ansprüche,
wobei das Gasregelventil (1) ein Sicherheitsmodul (10) aufweist, welches stromab des Ventileingangs (41) und stromauf des Regelmoduls (20) am Zentralmodul (40) angeordnet und ausgebildet ist, den Durchfluss des Gases durch das Zentralmodul (40) in einer Sperrstellung zu unterbinden und in einer Durchlassstellung freizugeben.

## Claims

1. A gas control valve (1) for electronic pressure control of a gas-air mixture in a gas heater,
wherein the gas control valve (1) has a central module (40), a control module (20), and a sensor module (30),
wherein the central module (40) can be flowed through by gas from a valve entrance (41) to a valve exit (42),
wherein the control module (20) is arrangeable immediately at the central module (40) and is configured to control a through-flow of the gas through the central module (40) with a throttle element (23) being fluidically arranged between the valve entrance (41) and the valve exit (42),
wherein the sensor module (30) is arrangeable immediately at the central module (40) and has at least one sensor (31, 32) which is in operative connection with gas flowing through the central module (40) via a gas inlet (44) that is fluidically arranged between the throttle element (23) and the valve exit (42) and which is configured to detect a pressure difference between the gas flowing through the central module (40) and air having a reference pressure for pressure control,
wherein the central module (40) and the sensor module (30) have attachment interfaces that correspond with one another and the sensor module (30) is immediately fixable to the central module (40),
and the central module (40) provides attachment interfaces at multiple sides and the sensor module (30) is alternatively fixable at each of the multiple sides.

2. The gas control valve according to claim 1,
wherein the at least one sensor (31, 32) is a mass flow sensor and is configured
to detect the pressure difference by measurement of a mass flow between the gas inlet (44) and an air inlet (34) of the sensor module (30) that is in operative connection with the air.

3. The gas control valve according to claim 1 or 2,
wherein the at least one sensor (31, 32) is a differential pressure sensor and configured to detect the pressure difference by measurement of a differential pressure between the gas flowing through the central module (40) downstream of the control module (20) and the air at an air inlet (34) of the sensor module (30), from which the gas-air mixture is formed.

4. The gas control valve according to claim 2 or 3,
wherein a dust filter (35) is provided at the air inlet (34) of the sensor module (30).

5. The gas control valve according to any one of the preceding claims,
wherein the sensor module (30) has two sensors (31, 32).

6. The gas control valve according to the preceding claim,
wherein the sensor module (30) has control electronics (33) that are configured to determine an averaged value from each of the values measured by the sensors (31, 32) and/or to compare and/or to plausibilise the values measured by the sensors (31, 32).

7. The gas control valve according to the preceding claim,
wherein the control electronics (33) have at least one communication interface and/or one voltage supply unit for voltage supply of the control electronics (33) and/or of the sensors (31, 32).

8. The gas control valve according to any one of the preceding claims,
wherein the central module (40) and the sensor module (30) have fluid interfaces (36, 46) that correspond with one another, via which the at least one sensor (31, 32) are connected to the gas flowing through the central module (40) downstream of the control module (20),
wherein the fluid interfaces (36, 46) are immediately connectable to one another and/or via a fluid line (37).

9. The gas control valve according to the preceding claim,
wherein the fluid interface (46) of the central module (40) is connected to the gas inlet (44) that, downstream of the control module (20), opens into an area (43) of the central module (40) through which gas flows,
wherein the gas inlet (44) is in operative connection with the gas and is shielded from the gas flow by a shield (45) which covers the gas inlet (44) in a flow direction of the gas.

10. The gas control valve according to the preceding claim,
wherein the central module (40) has a housing (47) that has an opening covered by a lid (48) downstream of the control module (20),
wherein a seal (49) is provided between the lid (48) and the housing (47),
and wherein the shield (45) is formed by the lid (48) and/or the seal (47) or a shielding body.

11. The gas control valve according to any one of the preceding claims,
wherein the sensor module (30) has at least one condensate outlet (38) that is configured to collect condensate generated in the sensor module (30) and/or to remove it from the sensor module (30).

12. The gas control valve according to the preceding claim,
wherein the condensate outlet (38) is configured to collect condensate generated at the at least one sensor (31, 32) and/or to remove it from the sensor module (30).

13. The gas control valve according to any one of the preceding claims,
wherein the gas control valve (1) has a safety module (10) that is arranged at the central module (40) downstream of the valve entrance (41) and upstream of the control module (20) and is configured to prevent the flow of gas through the central module (40) when in a blocking position and to allow it in a passage position.

## Revendications

1. Soupape de régulation de gaz (1) pour la régulation électronique de la pression d'un mélange gaz-air dans une chaudière à gaz,
dans laquelle la soupape de régulation de gaz (1) présente un module central (40), un module de régulation (20) et un module capteur (30),
dans laquelle le gaz peut s'écouler à travers le module central (40) d'une entrée de soupape (41) à une sortie de soupape (42),
dans laquelle le module de régulation (20) peut être agencé directement sur le module central (40) et est conçu pour réguler un débit de gaz à travers le module central (40) à l'aide d'un élément d'étranglement (23) agencé, du point de vue de l'écoulement, entre l'entrée de soupape (41) et la sortie de soupape (42),
dans laquelle le module capteur (30) peut être agencé directement sur le module central (40) et présente au moins un capteur (31, 32), lequel est en liaison fonctionnelle avec le gaz s'écoulant à travers le module central (40) par une entrée de gaz (44) agencée, du point de vue de l'écoulement, entre l'élément d'étranglement (23) et la sortie de soupape (42), et lequel est conçu pour détecter, pour la régulation de pression, une différence de pression entre le gaz s'écoulant à travers le module central (40) et un air présentant une pression de référence, dans laquelle le module central (40) et le module capteur (30) présentent des interfaces de fixation correspondantes l'une à l'autre et le module capteur (30) peut être fixé directement sur le module central (40)
et le module central (40) prévoit des interfaces de fixation sur plusieurs côtés et le module capteur (30) peut être fixé alternativement sur chacun des plusieurs côtés.

2. Soupape de régulation de gaz selon la revendication 1,
dans laquelle l'au moins un capteur (31, 32) est un capteur de débit massique et est conçu pour
détecter la différence de pression par mesure d'un débit massique entre l'entrée de gaz (44) et une entrée d'air (34) du module capteur (30) en liaison fonctionnelle avec l'air.

3. Soupape de régulation de gaz selon la revendication 1 ou 2,
dans laquelle l'au moins un capteur (31, 32) est un capteur de pression différentielle et est conçu pour détecter la différence de pression par mesure d'une pression différentielle entre le gaz, lequel s'écoule à travers le module central (40) en aval du module de régulation (20), et l'air au niveau d'une entrée d'air (34) du module capteur (30), à partir desquels le mélange gaz-air est formé.

4. Soupape de régulation de gaz selon la revendication 2 ou 3,
dans laquelle au niveau de l'entrée d'air (34) du module capteur (30) un filtre à poussière (35) est prévu.

5. Soupape de régulation de gaz selon l'une quelconque des revendications précédentes,
dans laquelle le module capteur (30) présente deux capteurs (31, 32).

6. Soupape de régulation de gaz selon la revendication précédente,
dans laquelle le module capteur (30) présente une électronique de commande (33), laquelle est conçue pour déterminer une valeur moyenne à partir des valeurs respectives mesurées par les capteurs (31, 32) et/ou pour comparer et/ou pour valider les valeurs mesurées par les capteurs (31, 32) l'une avec l'autre.

7. Soupape de régulation de gaz selon la revendication précédente,
dans laquelle l'électronique de commande (33) présente au moins une interface de communication et/ou une unité d'alimentation en tension pour l'alimentation en tension de l'électronique de commande (33) et/ou des capteurs (31, 32).

8. Soupape de régulation de gaz selon l'un quelconque des revendications précédentes,
dans laquelle le module central (40) et le module capteur (30) présentent des interfaces fluidiques (36, 46) correspondantes l'une à l'autre, par lesquelles l'au moins un capteur (31, 32) sont en liaison avec le gaz s'écoulant à travers le module central (40) en aval du module de régulation (20),
dans laquelle les interfaces fluidiques (36, 46) peuvent être connectées l'une à l'autre directement et/ou via une conduite fluidique (37).

9. Soupape de régulation de gaz selon la revendication précédente,
dans laquelle l'interface fluidique (46) du module central (40) est connectée à l'entrée de gaz (44), laquelle débouche en aval du module de régulation (20) dans une zone (43) du module central (40) à travers laquelle s'écoule le gaz,
dans laquelle l'entrée de gaz (44) est en liaison fonctionnelle avec le gaz et est protégée du flux de gaz par un écran (45), lequel recouvre l'entrée de gaz (44) dans la direction d'écoulement du gaz.

10. Soupape de régulation de gaz selon la revendication précédente,
dans laquelle le module central (40) présente un boîtier (47), lequel présente en aval du module de régulation (20) une ouverture recouverte par un couvercle (48),
dans laquelle entre le couvercle (48) et le boîtier (47) est prévu un joint (49)
et dans laquelle l'écran (45) est formé par le couvercle (48) et/ou le joint (47) ou un corps d'écran.

11. Soupape de régulation de gaz selon l'un quelconque des revendications précédentes,
dans laquelle le module capteur (30) présente au moins un écoulement de condensat (38), lequel est conçu pour collecter un condensat se formant dans le module capteur (30) et/ou pour l'évacuer du module capteur (30).

12. Soupape de régulation de gaz selon la revendication précédente,
dans laquelle l'écoulement de condensat (38) est conçu pour collecter le condensat se formant au niveau de l'au moins un capteur (31, 32) et/ou pour l'évacuer du module capteur (30).

13. Soupape de régulation de gaz selon l'un quelconque des revendications précédentes,
dans laquelle la soupape de régulation de gaz (1) présente un module de sécurité (10), lequel est agencé en aval de l'entrée de soupape (41) et en amont du module de régulation (20) au niveau du module central (40) et est conçu pour empêcher le débit de gaz à travers le module central (40) dans une position fermée et pour le libérer dans une position ouverte.
